# EUROPÄISCHE PATENTSCHRIFT

(11) **EP 1 233 315 B1**
(45) Veröffentlichungstag und Bekanntmachung des Hinweises auf die Patenterteilung: **28.06.2006**
(21) Anmeldenummer: 01810171.7
(22) Anmeldetag: 19.02.2001
(51) Int. Cl.: G05B 19/042

(54) **Verfahren und Vorrichtung zur Konfiguration eines elektrischen Endgerätes**
Method and device for configuring an electrical end apparatus
Méthode et dispositif de configuration d'un appareil électrique

(43) Veröffentlichungstag der Anmeldung: 21.08.2002
(73) Patentinhaber: ABB RESEARCH LTD., 8050 Zürich (CH)
(72) Erfinder: Wimmer, Wolfgang, 5323 Rietheim (CH)
(74) Vertreter: ABB Patent Attorneys

(56) Entgegenhaltungen:
- EP-A- 0 874 343
- EP-A- 0 929 056
- DE-A- 19 509 836
- DE-A- 19 530 643
- DE-A- 19 857 649
- US-A- 5 160 924
- US-A- 5 805 926

## Beschreibung

### Technisches Gebiet

Die Erfindung betrifft ein Verfahren zur Konfiguration eines elektrischen Endgerätes oder Teilen davon, das in einer Anlage mit einer Vielzahl von Endgeräten integriert ist, mit einem Konfigurationsgerät, wobei jedem Endgerät ein Identifikationssthlüssel, insbesondere eine Adresse, zugeordnet ist und betrifft ferner die Verwendung des eingangs erläuterten Verfahrens zur Überprüfung der Adressierung eines Endgerätes.

Die Erfindung betrifft weiterhin eine Vorrichtung zur Konfiguration eines elektrischen Endgerätes oder Teilen davon, das in einer Anlage mit einer Vielzahl von Endgeräten integriert ist, mit einem Konfigurationsgerät.

### Stand der Technik

Das Gebiet der vorliegenden Erfindung betrifft die Steuerung von Prozessen mittels einer Vielzahl von Endgeräten, die hauptsächlich räumlich benachbart in einer Anlage angeordnet sind. Um nun jedes Endgerät für einen aktuellen Anwendungsfall anzupassen oder auf eine Funktionsausführung festzulegen, muß es konfiguriert, das heißt mit speziellen Daten gespeist werden.

Vergegenwärtigt man sich die steigende Anzahl elektrischer Komponenten und/oder der Endgeräte für eine solche Steuerungsanlage, die von einem Bediener über ein gesondertes Konfigurationsgerät bedient werden sollen, und den damit einher gehenden Datenübertragungsbedarf, so ist es wünschenswert, erstens den ebenfalls steigenden Verkabelungsaufwand zu senken und zweitens den Standort des Konfigurationsgerätes flexibel zu halten, damit beispielsweise der Bediener während der Konfigurierung den Überblick über die Gesamtanlage beibehalten kann. Um hier, insbesondere in räumlicher und verbindungstechnischer Hinsicht, mehr Flexibilität zu erreichen, ist eine berührungsfreie, insbesondere drahtlose Kommunikationsverbindung zwischen dem Konfigurationsgerät und den Endgeräten erforderlich.

Soll nun ein Endgerät mit einer berührungslosen Verbindung zwischen dem - vorzugsweise tragbaren - Konfigurationsgerät und dem jeweiligen Endgerät konfiguriert werden, so muß sichergestellt sein, daß auch das richtige Endgerät angesprochen wird. Denn bei einer Anlage zur Prozeßsteuerung, die aus mehreren vorzugsweise benachbart angeordneten Endgeräten besteht, läßt sich aus der Ferne und in der notwendigen Schnelligkeit nicht mehr bestimmen, ob nun auch wirklich das richtige Gerät angewählt worden ist.

Geht man weiterhin davon aus, daß es notwendig ist, mehrere Endgeräte parallel oder zeitlich überschneidend zu konfigurieren, dann werden in einer bestimmten Zeitspanne mehrere Geräte gleichzeitig angesprochen. Auch in diesem Fall ist es wesentlich, auf ein Verfahren zurückgreifen zu können, das ein korrektes Ansprechen der Geräte ermöglicht, indem vor der eigentlichen Konfigurierung und nach der automatischen Identifizierung des jeweiligen Gerätes, deren Identifikation nochmals überwacht wird. Erst wenn sichergestellt ist, daß das angesprochene Gerät auch das zu konfigurierende ist, soll eine Konfigurierung ausgeführt werden.

Bisher wurde eine solche Überprüfung nicht ausgeführt. Dadurch kam es häufiger zu Fehlkonfigurierungen. Ist ein Endgerät mit falschen Prozeßdaten eingestellt, so kann dieses seine vorgesehene Funktion in der Prozeßsteuerung nicht mehr erfüllen und damit wird die Sicherheit der gesamten Anlage und damit des gesamten Prozesses unzureichend.

Die DE 197 25 443 zeigt ein Verfahren zur Konfigurierung eines Gerätes, insbesondere eines Telefons, das in einem Telekommunikationsnetz berührungslos mit anderen Geräten verbunden ist. Zur Konfigurierung des Telefons werden von einem Benutzer Konfigurationsdaten vornehmlich direkt an dem zu konfigurierenden Telefon eingegeben. Eine Identifikation des zu konfigurierenden Gerätes ist deshalb nicht notwendig. In dieser Schrift wird zwar auch vorgeschlagen, daß die Eingabe der Konfigurationsdaten auch an einem anderen sogenannten Konfigurationsserver erfolgen kann. Damit werden die Geräte auch über eine berührungslose Kommunikationsverbindung zwischen dem Telefon und einem Konfigurierungsgerät konfiguriert, doch für die korrekte Identifikation des zu konfigurierenden Gerätes wird keine Lösung vorgestellt. Für dieses Gebiet der Technik ist eine Überwachung der Adressierung des Endgerätes auch nicht zwingend notwendig, da eine fehlerhafte Konfigurierung eines Telefons jederzeit durch die korrekte ersetzt werden kann und es in der Zwischenzeit zu keinerlei unerwünschten Nebeneffekten, sog. "side effects" kommt, wie es bei einer fehlerhaften Konfigurierung eines Endgerätes der Fall wäre, das Bestandteil einer Prozeßsteuerungsanlage ist.

Im Gegensatz dazu kennzeichnet sich das technische Umfeld der vorliegenden Erfindung nicht durch Telekommunikationsnetze, wie bei der eben vorgestellten Offenlegungsschrift, deren Endgeräte (hauptsächlich Telefone) durch deren Funktion schon eine eindeutige Identifikation durch die Telefonnummer ermöglichen, sondern bezieht sich auf Prozeßanlagen, deren Endgeräte vielmehr durch deren Adresse und deren räumliche Anordnung innerhalb der Gesamtanlage definiert werden. Soll nun ein solches Endgerät konfiguriert werden, ist es für die Sicherheit des Gesamtsystems von entscheidender Bedeutung, daß exakt das zu konfigurierende Endgerät und auch nur dieses konfiguriert wird und nicht ein anderes Endgerät. Jedem Endgerät wird beim Einbau in die Anlage eine eineindeutige Adresse zugewiesen. Mit dieser Adresse wird dann das Endgerät während des gesamten Prozesses angesprochen. Ist diese Adressenvergabe fehlerhaft, kann die Gesamtanlage nicht mehr fehlerfrei funktionieren. Jede Konfiguration, die auf einer falschen Adressierung basiert, muß notwendigerweise fehlschlagen, da das falsche Endgerät angesprochen wird. Deshalb ist eine Überwachung der Adressierung des zu konfigurierenden Endgerätes unerläßlich.

Es ist deshalb erforderlich, daß vor der eigentlichen Konfigurierung das zu konfigurierende Endgerät bzw. die Verbindung zwischen dem Konfigurationsgerät und dem jeweiligen Endgerät einer nochmaligen Überprüfung unterzogen wird, nämlich dahingehend, ob es korrekt detektiert bzw. identifiziert worden ist.

Dies ist nur möglich, wenn technische Vorkehrungen getroffen werden, daß jedem Endgerät eineindeutig ein erster Identifikationsschlüssel und ein zweiter Identifikationsschlüssel zugeordnet werden. Wird als erster Identifikationsschlüssel die Adresse des Endgerätes gewählt, so kann diese mit dem zweiten Identifikationsschlüssel kontrolliert werden. Stimmen beide Identifikationsschlüssel überein, so ist die Wahrscheinlichkeit, daß - trotz der Übereinstimmung - eine fehlerhafte Adressierung vorlag, äußerst gering und zu vernachlässigen, so daß von einer korrekten Adressierung ausgegangen werden kann.

Bisher erfolgte die Konfiguration von Endgeräten in einer Prozeßsteuerungsanlage über eine feste Verdrahtung mit dem Konfigurationsgerät. Eine Rücksicherung, daß auch das richtige Gerät ausgewählt und identifiziert worden ist, war deshalb nicht notwendig.

Soll nun ein Endgerät mit einer berührungslosen Verbindung zu dem Konfigurationsgerät konfiguriert werden, muß sichergestellt sein, daß das ausgewählte bzw. angesprochene Gerät auch tatsächlich das zu konfigurierende ist.

Aufgabe der vorliegenden Erfindung ist es deshalb, ein Verfahren und eine Vorrichtung zur berührungsfreien Konfiguration eines Endgerätes in einer Anlage, insbesondere einer Prozeßsteuerungsanlage, zur Verfügung zu stellen, das/die überwacht, ob das zu konfigurierende Endgerät auch korrekt identifiziert worden ist und nur im Falle einer korrekten Identifikation das Endgerät konfiguriert, wobei weiterhin die Sicherheit einer solchen Prozeßänderung durch Verifikation der Adressierung des jeweiligen Endgerätes erhöht wird

### Darstellung der Erfindung

Diese Aufgabe wird erfindungsgemäß durch die Verfahren und Vorrichtungen gemäß den unabhängigen Patentansprüchen gelöst. Weitere vorteilhafte Ausgestaltungen, Aspekte und Details der vorliegenden Erfindung ergeben sich aus den abhängigen Patentansprüchen, der Beschreibung und den beigefügten Zeichnungen.

Die Aufgabe kann zunächst erfindungsgemäß durch ein Verfahren der eingangs genannten Art gelöst werden, bei dem das Konfigurationsgerät drahtlos mit den Endgeräten verbindbar ist, mit folgenden Schritten:
A - automatische Identifikation des zu konfigurierenden Endgerätes, indem
   -- der erste und der zweite Identifikationsschlüssel des zu konfigurierenden Endgerätes erfaßt werden und indem
   -- das Konfigurationsgerät ein Signal, insbesondere einen Winkbefehl, an das Endgerät sendet, das dem ersten Identifikationsschlüssel zugeordnet ist, und indem
   -- ein durch den Empfang des Winkbefehls identifiziertes Endgerät oder ein diesem Endgerät eineindeutig zugeordnetes Gerät auf den Winkbefehl mit einem Antwortsignal antwortet,
B - Überwachen der Identifikation des identifizierten Endgerätes, indem
   -- überprüft wird, ob das identifizierte Endgerät mit dem Endgerät übereinstimmt, das dem zweiten Identifikationsschlüssel zugeordnet ist und, falls ja,
C - Konfiguration des identifizierten Endgerätes mit dem Konfigurationsgerät durch Übertragung von Konfigurationsdaten.

Die Aufgabe wird weiterhin durch die Verwendung des eingangs beschriebenen Verfahrens zur Überwachung einer Adressierung eines elektrischen Endgerätes gelöst, das in einer Anlage zusammen mit anderen elektrischen Endgeräten angeordnet ist, über ein berührungslos verbindbares Konfigurationsgerät, wobei jedem Endgerät ein erster Identifikationsschlüssel, insbesondere eine Adresse und ein zweiter Identifikationsschlüssel zugeordnet ist, mit folgenden Schritten:
- Erfassen der Adresse und des zweiten Identifikationsschlüssels des zu überwachenden Endgerätes,
- Senden eines Signals, insbesondere eines Winkbefehls, ausgehend von dem Konfigurationsgerät an die Adresse des Endgerätes,
- Empfangen des Winkbefehls von einem durch den Winkbefehl angesprochenen Endgerät,
- Senden eines Antwortsignals von dem durch den Winkbefehl angesprochenen Endgerät an das Konfigurationsgerät und
- Überwachen der Adressierung des Endgerätes, indem das Konfigurationsgerät überprüft, ob das Endgerät, das das Antwortsignal gesendet hat mit dem Endgerät übereinstimmt, das dem zweiten Identifikationsschlüssel zugeordnet ist und im Falle einer Übereinstimmung eine korrekte Adressierung bestätigt.

Die Aufgabe wird ferner durch eine Vorrichtung der eingangs genannten Art gelöst mit:
- einer Erfassungseinheit, die dem Konfigurationsgerät zugeordnet ist und die den ersten und zweiten Identifikationsschlüssel des zu konfigurierenden Endgerätes erfaßt,
- einer Sendeeinheit, die dem Konfigurationsgerät zugeordnet ist und die ein Signal, insbesondere einen Winkbefehl an das Endgerät sendet, das dem ersten Identifikationsschlüssel zugeordnet ist, und
- einer Empfangs- und Antworteinheit, die auf den Winkbgfehl des Konfigurationsgerätes mit einem Antwortsignal antwortet,
- einer Überwachungseinheit des Konfigurationsgerätes, die überwacht, ob das zu konfigurierende Endgerät korrekt identifiziert worden ist, indem
- eine Komparatoreinheit überprüft, ob das Endgerät, das das Antwortsignal gesendet hat mit dem Endgerät übereinstimmt, das dem zweiten Identifikationsschlüssel zugeordnet ist und
- einer Konfigurationseinheit, die dem Konfigurationsgerät zugeordnet ist und die das zu konfigurierende Endgerät durch Übertragung von Konfigurationsdaten konfiguriert.

Üblicherweise wird beim Einbau eines Endgerätes in eine Prozeßsteuerungsanlage sowohl die Position des Endgerätes in der Anlage, als auch dessen Adresse eindeutig festgelegt. Diese beiden Parameter dienen in der bevorzugten Ausführungsform der vorliegenden Erfindung als Identifikationsschlüssel für die Identifikation eines Endgerätes. Anstelle der Position des Endgerätes ist in einer anderen Ausführungsform der Erfindung ein anderer Parameter einsetzbar, wie beispielsweise die Zugehörigkeit zu einer bestimmten Prozeßroutine, falls für jede Prozeßroutine jeweils genau ein Endgerät zuständig ist.

Bei der Adressierung eines neu eingebauten Endgerätes kann es jedoch zu folgenschweren Fehlern kommen; etwa dann, wenn beispielsweise zwei Endgeräte fälschlicherweise mit ein und derselben Adresse adressiert werden. Soll nun dieses fehladressierte Endgerät konfiguriert werden, so zieht die Fehladressierung nach der automatischen Detektion oder Identifikation der/s vermeintlich zu konfigurierenden Endgeräte(s) eine fehlerhafte Konfiguration nach sich, da fälschlicherweise zwei Endgeräte konfiguriert werden, nämlich die, die der Adresse entsprechen.

Dieser Fehler wird erfindungsgemäß vermieden, indem nach der automatischen Identifikation des Endgerätes überprüft wird, ob diese Identifikation korrekt erfolgt ist und indem eine Konfiguration des Endgerätes erst dann stattfindet, wenn sichergestellt ist, das das identifizierte Endgerät auch wirklich das zu konfigurierende ist.

In der vorteilhaften Ausführungsform ist somit jedem Endgerät ein physikalischer Ort innerhalb der Anlage zugeordnet; das heißt, die Zuordnung zwischen den Koordinaten des Endgerätes und dem Endgerät selbst ist eineindeutig und dient als zweiter Identifikationsschlüssel. Das Endgerät kann deshalb sowohl über die Position als auch über dessen Adresse eindeutig identifiziert werden. Da beide Identifikationsschlüssel (hier: Position und Adresse) unabhängig voneinander aktivierbar sind, ist eine Überwachung der Zuordnung zwischen dem Endgerät und einem der beiden Identifikationsschlüssel aufgrund des jeweils anderen Identifikationsschlüssels möglich. Mit der Erfindung wird vorzugsweise die Adressierung des zu konfigurierenden Endgerätes durch die Erfassung der Position des Endgerätes durch die Abfolge folgender Schritte überwacht:
Nachdem festgelegt worden ist, welches Endgerät konfiguriert werden soll, wird dessen Adresse und dessen Position - beispielsweise durch den Zugriff auf eine Look-Up-Table - erfaßt. Das Konfigurationsgerät sendet dann einen Winkbefehl an die soeben erfaßte Adresse. Auf diesen Winkbefehl antwortet dasjenige Endgerät, das der angerufenen Adresse zugeordnet ist, mit einem Antwortsignal. Nun wird mit einer im Konfigurationsgerät ablaufenden Routine untersucht, ob der Empfänger des Winkbefehls und der Sender des Antwortsignals mit dem Endgerät übereinstimmt, das der anfänglich erfaßten Position zugeordnet ist. Falls ja, wird die automatische Detektion des zu konfigurierenden Endgerätes bestätigt und das selektierte Endgerät wird - vorzugsweise über eine drahtlose Kommunikationsverbindung - konfiguriert.

Berücksichtigt man, daß die unter anderem aus vielen Endgeräten aufgebaute Anlage zur Prozeßsteuerung eingesetzt wird, wird ersichtlich, daß jedem Endgerät ein bestimmter Prozeß oder Prozeßteil zugeordnet ist, der meistens nicht an der gleichen räumlichen Position befindlich ist, wie das jeweilige Endgerät. Zur erfindungsgemäßen Überwachung der Zuordnung zwischen dem physikalischen Endgerät und dessen Adresse kann es in bestimmten Fällen vorteilhafter sein, wenn nicht das Endgerät mit einem Antwortsignal auf den Winkbefehl zurück winkt, sondern der Prozeß oder Prozeßteil, der vom Endgerät geleitet oder gesteuert wird. Dies hat den Vorteil, daß die unmittelbare Verbindung zwischen dem Endgerät und dem ihm eineindeutig zugeordneten Prozeß hervorgehoben wird, was in bestimmten Fällen die Identifikation des Endgerätes erleichtern kann, nämlich dann, wenn der Prozeß schneller und/oder leichter zu identifizieren ist als das zugehörige Endgerät.

Weiterhin ist es möglich, zumindest teilweise auf das bisherige Konzept der Verdrahtung zurückzugreifen und eine Busleitung als Kommunikationsverbindung zwischen dem Konfigurationsgerät und dem Endgerät einzusetzen. Ein Vorteil des erfindungsgemäßen Verfahrens liegt deshalb in der wahlweisen Ausführungsmöglichkeit der Kommunikationsverbindung - verdrahtet oder berührungsfrei -.

Durch die Überprüfung der automatischen Bestimmung des zu konfigurierenden Endgerätes ist eine zusätzliche Überwachungsmöglichkeit vorgesehen, die die Sicherheit der Gesamtanlage erhöht.

In einer aufwandsoptimierten Ausführungsform ist jedes Endgerät mit einer optischen Anzeige, vorzugsweise einer LED, ausgebildet, die ein optisches Antwortsignal sendet, falls sie von dem Konfigurationsgerät angesprochen worden ist.

Alternativ dazu, kann das Endgerät auch eine akustisches Signal als Antwort auf den Winkbefehl des Konfigurationsgerätes senden.

In einer weiteren bevorzugten Ausführungsform der Erfindung wird dieses Antwortsignal von einem Bediener erfaßt und anhand vorher festgelegter Kriterien mit dem zweiten Identifikationsschlüssel auf Übereinstimmung verglichen. Beispielsweise Eine Benutzereingabe in das Konfigurationsgerät bestätigt diese Übereinstimmung, worauf das Konfigurationsgerät nach Massgabe dieser Benutzereingabe die Konfiguration des identifizierten Endgeräts vornimmt.

In einer weiteren bevorzugten Ausführungsform der Erfindung wird das Antwortsignal automatisch weiterverarbeitet, indem beispielsweise durch einen am Konfigurationsgerät befindlichen Infrarot-Sensor oder eine Photozelle erfaßt wird, welches Endgerät dieses Antwortsignal gesendet hat.

Bei der akustischen Signalgebung ist vorteilhafterweise jedem Endgerät ein spezifisches Tonsignal zugeordnet, so daß ebenfalls automatisiert bestimmt werden kann, von welchem Endgerät das erfaßte akustische Antwortsignal kommt.

Ein Vorteil des erfindungsgemäßen Verfahrensablaufs liegt darin, daß die Adressierung wirklich erst bei Bedarf - also erst unmittelbar vor der erforderlichen Konfigurierung und nicht bei einem beliebigen Datenaustausch mit dem Endgerätüberprüft wird, um Rechenleistung einzusparen.

Befinden sich mehrere Konfigurationsgeräte im Einsatz, so daß mehrere Endgeräte zur gleichen Zeit angesprochen, identifiziert und anschließend konfiguriert werden, ist erstens eine eindeutige und korrekte Detektion des jeweils aktuell zu konfigurierenden Gerätes unerläßlich und ist es zweitens vorteilhaft, wenn nur dasjenige Endgerät ein Antwortsignal - als Antwort auf den Winkbefehl des Konfigurationsgerätes - sendet, das aktiviert bzw. angesprochen ist. Bei bisherigen Lösungsvorschlägen nach dem Stand der Technik sendet ein Endgerät unspeziftsch ein Antwortsignal, nämlich grundsätzlich immer dann, wenn das Endgerät aktiviert wird und beliebige Daten sendet und/oder empfängt. Da aber zum gleichen Zeitpunkt mehrere Konfigurationsgeräte aktiv sein können, ist beispielsweise das Blinken der LED am Endgerät nicht als eindeutiges Indiz dafür heranzuziehen, daß das Konfigurationsgerät mit genau diesem Endgerät in Datenaustausch steht. Wegen der Vielzahl der Prozesse war bei einer drahtlosen Verbindung keine eindeutige Zuordnung von dem Parameter 'Senden eines Antwortsignales' und dem Endgerät mehr möglich. Vorteilhafterweise antwortet das Endgerät erfindungsgemäß nur noch spezifisch auf den Winkbefehl

Der Datenaustausch zwischen dem zu konfigurierenden Endgerät und dem Konfigurationsgerät kann zweifach ausgestaltet sein:
Erstens kann die Kommunikationsverbindung zwischen den beteiligten Geräten unidirektional sein, so daß nur Daten, insbesondere Konfigurationsdaten, von dem Konfigurationsgerät zu dem Endgerät übertragen werden können. Das Antwortsignal wird dann über einen anderen Kommunikationskanal, insbesondere den optischen oder akustischen, übertragen.

In einer anderen Ausgestaltung ist diese Verbindung bidirektional ausgebildet, so daß sowohl Daten von dem Konfigurationsgerät zum Endgerät als auch vice versa übertragen werden können. Das hat den Vorteil, daß die zur Identifikation des Endgerätes dienenden Daten ebenfalls über dieselbe Verbindung übertragen werden können. Zusätzlich können Konfigurationsparameter während der Konfiguration vom Endgerät erfragt und weiterverarbeitet werden. Die Kommunikationsverbindung und die zugehörigen Verarbeitungsmodule sind allerdings entsprechend komplexer ausgeführt als bei der unidirektionalen Verbindung. Insbesondere beim Einsatz von mehreren Konfigurationsgeräten entsteht ein Synchronisationsproblem: Welches Endgerät weist welchen Konfigurationsstatus auf? Um die Datenbestände abzugleichen, empfiehlt es sich, das Konfigurationsgerät mit einer Statusverarbeitungseinheit auszustatten, mittels derer es möglich ist, den aktuellen Konfigurationsstatus eines Endgerätes (über die bidirektionale Kommunikationsverbindung) zu erfragen und auf dem Konfigurationsgerät anzuzeigen. Weiterhin kann das Konfigurationsgerät den Soll-Konfigurationszustand anzeigen. Durch den Vergleich von Soll- und Ist- Zustand kann eine Aussage über die Notwendigkeit einer Konfiguration abgeleitet werden.

Die Art der Verbindung zwischen dem Konfigurationsgerät und dem Endgerät kann eine Funkverbindung sein, insbesondere eine Bluetooth Verbindung, die ein nahezu weltweit verfügbares Frequenzband um 2,4 GHz nutzt mit Datenraten bis zu mindestens 1 MBit pro Sekunde oder ein Wireless WAN, mit entsprechender Schnittstelle nach einem Mobilfunkstandard, wie beispielsweise dem GSM-Standard (Global System for Mobile communication). Dies bringt den Vorteil, daß die Kommunikation auch über weite Entfernungen möglich ist und bereits vorhandene Mobilfunknetze ausgenutzt werden können. Alternativ kann eine Infrarot- Verbindung mit entsprechenden Schnittstellen eingesetzt werden, die speziell für die Kommunikation über kurze Entfernungen zwischen dem Konfigurationsgerät und dem Endgerät geeignet ist und die eine kostengünstigere Herstellung der erfindungsgemäßen Vorrichtung ermöglicht.

Durch die erfindungsgemäße Überprüfung der automatische Detektion des zu konfigurierenden Endgerätes wird die Sicherheit der anschließenden Datenübertragung erhöht, so daß auch kritische - da folgenschwere - Änderungen am Endgerät vorgenommen werden können. So ist das Verfahren zwar grundsätzlich auf eine gegebenenfalls erstmalige Konfiguration des Endgerätes ausgelegt, es liegt aber eine Re-Konfiguration oder eine Übertragung von beliebigen Befehlssequenzen vom Konfigurationsgerät an das Endgerät ebenso im Rahmen der Erfindung. Die Erfindung ermöglicht somit über das berührungslos verbindbare Konfigurationsgerät eine "Remote-Control" der Prozeßanlage.

Um ein ungewolltes Überschreiben von Daten, insbesondere Rekonfigurationsdaten, im Endgerät zu vermeiden, umfaßt die Erfindung in der Ausbildung mit einer bidirektionalen Kommunikationsverbindung zusätzlich die Möglichkeit, die bisherigen Daten und Parameter des Endgerätes zwischen zu speichern, bis seitens des Bedieners ein Befehl gegeben wird, daß die ursprüngliche Konfiguration verworfen und tatsächlich gelöscht und durch die neue ersetzt werden soll. Ebenso ist ein "Tracing" des erfindungsgemäßen Verfahrensablaufs vorgesehen, so daß der Zustand nach jedem Verfahrensschritt gespeichert wird, um eine Fehlerdiagnose zu erleichtern und insbesondere den Fehler spezifisch lokalisieren zu können.

In Hinblick auf die Sicherheit der automatischen Konfigurierungsanlage erweist es sich ferner als vorteilhaft, daß die Erfindung in der bevorzugten Ausführungsform zusätzlich vorsieht, dass die Konfiguration des Endgerätes erst nach Eingabe einer Zugangsberechtigung, insbesondere eines Codewortes, gestattet ist.

Im Rahmen der Erfindung liegt es weiterhin, eine Busleitung vorzusehen, um die anfallenden Datensätze zwischen Konfigurationsgerät und Endgerät zu übertragen unter Verwendung eines geeigneten Busprotokolls.

Um eine möglichst hohe räumliche Flexibilität für die Bedienung, insbesondere die Konfigurierung, der Prozeßanlage zu erzielen, ist das Konfigurationsgerät vorzugsweise tragbar ausgestaltet und mit entsprechenden Schnittstellen zur Datenübertragung versehen.

Es liegt auch im Rahmen der Erfindung, die Einbauposition eines Endgerätes anhand des zweiten identifikationsschlüssels, hier die Adresse, zu überwachen und nicht umgekehrt, wie bisher beschrieben.

### Kurze Beschreibung der Zeichnungen

Weitere Vorteile, Merkmale und alternative Ausführungsformen der Erfindung ergeben sich aus der nachfolgenden detaillierten Figurenbeschreibung, die in Zusammenhang mit der Zeichnung zu lesen ist, in der:
Fig. 1 eine schematische Darstellung von einem Konfigurationsgerät und mehreren Endgeräten in eingebautem Zustand einer erfindungsgemäßen Vorrichtung,
Fig. 2 ein Ablaufdiagramm eines erfindungsgemäßen Verfahrens ist.

### Wege zur Ausführung der Erfindung

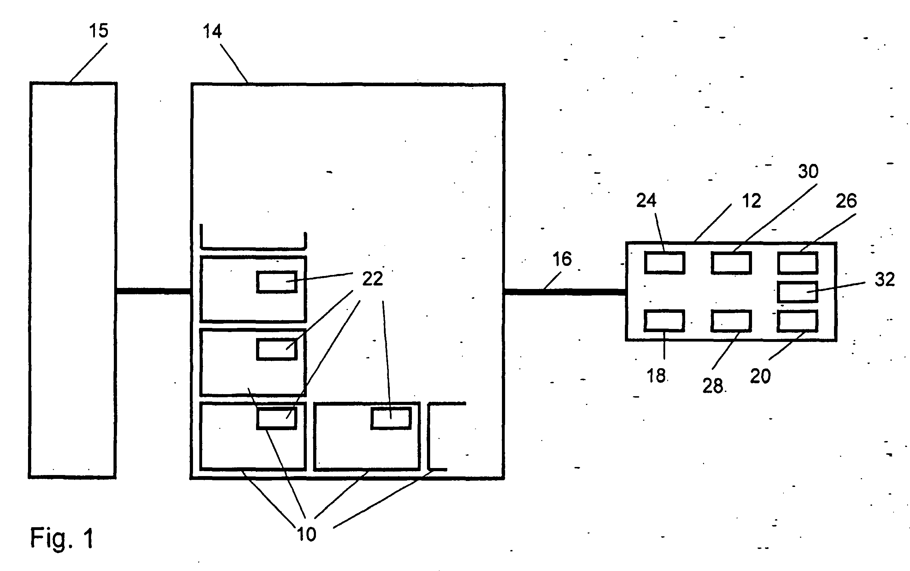

In Figur 1 sind die Bestandteile der erfindungsgemäßen Vorrichtung dargestellt, die nachfolgend kurz erläutert werden:
Die Vorrichtung besteht aus einer Vielzahl von im allgemeinen mit 10 bezeichneten Endgeräten und einem Konfigurationsgerät 12. Die Endgeräte 10 sind in einer Anlage 14 zur Prozeßsteuerung und vornehmlich in einer Art Prozeßleitkonsole eingebaut. Die Prozeßsteuerungsanlage 14 steuert eine meist räumlich entfernt befindliche Prozeßanlage 15. Zwischen den Endgeräten 10 und dem Konfigurationsgerät 12 besteht eine Kommunikationsverbindung 16. Jedes Endgerät 10 und das Konfigurationsgerät 12 sind mit entsprechenden Schnittstellen ausgestattet, die - je nach Art der Kommunikationsverbindung 16 - eine Datenübertragung ermöglichen.

Das Konfigurationsgerät 12 besteht aus folgenden Modulen:
- einer Erfassungseinheit 18, die einen ersten und zweiten Identifikationsschlüsselinsbesondere die Adresse und die Position des zu konfigurierenden Endgerätes 10 erfaßt,
- einer Sendeeinheit 20, die einen Winkbefehl an das Endgerät 10 sendet, das dem ersten Identifikationsschlüssel- der erfaßten Adresse - zugeordnet ist,
- einer Überwachungseinheit 24, die überwacht, ob das zu konfigurierende Endgerät 10 korrekt identifiziert worden ist,
- einer Komparatoreinheit 26, die überprüft, ob das Endgerät 10, das das Antwortsignal gesendet hat mit dem Endgerät 10 übereinstimmt, das dem zweiten Identifikationsschlüssel - der erfaßten Position - zugeordnet ist und
- einer Konfigurationseinheit 28, die das zu konfigurierende Endgerät 10 durch Übertragung von Konfigurationsdaten konfiguriert.

Das Endgerät 10 ist zusätzlich zu seinen üblichen Bauteilen mit einer Empfangs- und Antworteinheit 22 ausgestattet, die auf den Winkbefehl des Konfigurationsgerätes 12 mit einem Antwortsignal antwortet.

Vorzugsweise wird als Kommunikationskanal eine drahtlose Verbindung zwischen dem Konfigurationsgerät 12 und dem Endgerät 10 gewählt, so daß beide Geräte 10,12 mit entsprechenden Schnittstellen ausgestattet sind und eine entsprechende Verarbeitungseinheit aufweisen und einen Speicher für die anfallenden Datensätze. Darauf basierend wird das Endgerät 10 nach überwachter Auswahl berührungsfrei konfiguriert.

Es ist jedoch auch möglich, auf die herkömmliche Verbindung über eine feste Verdrahtung zurückzugreifen und eine Busleitung mit entsprechendem Busprotokoll vorzusehen, über die die Signale bzw. Daten übertragen werden. Dies hat den Vorteil, daß das Antwortsignal eindeutig einem Endgerät 10 zugeordnet werden kann; allerdings geht dies auch mit einer Einbuße an Flexibilität einher.

In einer anderen Ausführungsform der Erfindung dienen nicht die Adresse und die Position des Endgerät 10 als Identifikationsschlüssel, sondern andere Parameter, die einem Endgerät 10 jeweils eineindeutig zugeordnet werden können. Dies kann beispielsweise ein Prozeß oder ein Prozeßteil sein, wenn die Anlage so ausgelegt ist, daß für jeden Prozeß bzw. Prozeßteil ein eigenes Endgerät 10 eingesetzt wird. Damit definiert dieser als Identifikationsschlüssel dienende Parameter das jeweilige Endgerät 10.

Die erfaßten Daten werden in einem Speicher 30 gespeichert. Auch die beiden Identifikationsschlüssel, nämlich die nach dem Einbau des jeweiligen Endgerätes 10 festgelegte Position sowie dessen Adresse werden in einem Speicher 30 abgelegt. Es können auch zusätzliche Parameter gespeichert werden, die beispielsweise eine schnellere Fehlerlokalisierung bei der Adressierung ermöglichen.

Nachdem ein Endgerät 10 in die Anlage an eine vorbestimmte Position eingebaut worden ist, kann dieses Datum fest in einen Schreib-/Lesespeicher, beispielsweise in ein Flash ROM, des Endgerätes 10 eingeschrieben werden.

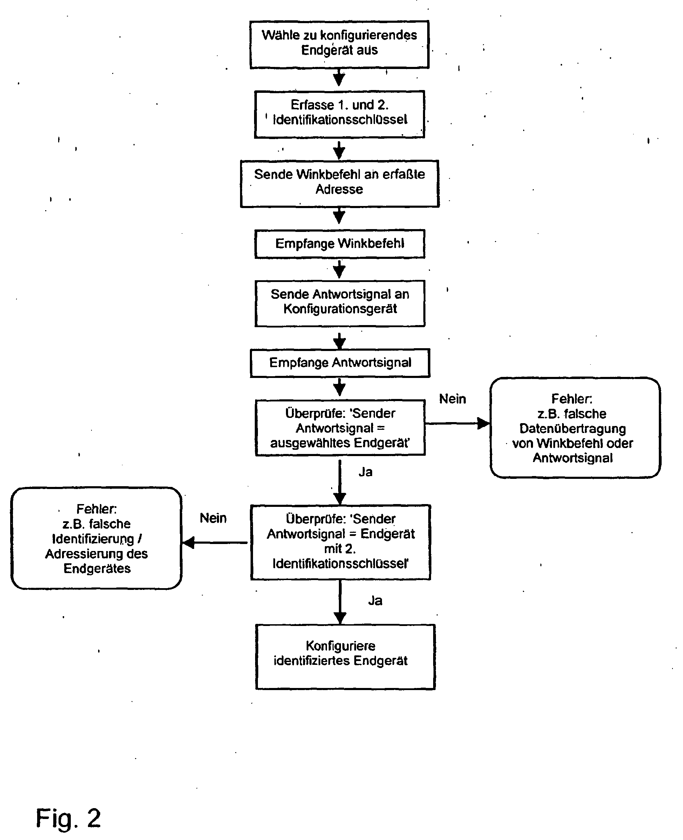

Nachfolgend und unter Bezugnahme auf Figur 2 soll der erfindungsgemäße Verfahrensablauf beschrieben werden:
Nachdem ein Endgerät 10 in eine Anlage eingebaut worden ist, wird in einem Speicher 30 dessen Adresse und dessen Position abgelegt.

Nun soll ein bestimmtes Endgerät 10 konfiguriert werden. Daraufhin werden seine beiden Identifikationsschlüssel, die Adresse und die Position, durch die Erfassungseinheit 18 erfaßt und es wird ein spezifischer Winkbefehl an die erfaßte Adresse gesendet. Das durch den Winkbefehl angesprochene Endgerät 10 antwortet mit einem Antwortsignal auf diesen Winkbefehl an das Konfigurationsgerät 12. Das Konfigurationsgerät 12 überwacht nun, ob der Empfänger des Winkbefehls mit dem Sender des Antwortsignals übereinstimmt. Denn bereits hier kann ein Fehler aufgetreten sein, indem etwa fälschlicherweise ein nicht angesprochenes Endgerät 10 mit einem Antwortsignal reagiert. Bei Übereinstimmung wird weiter geprüft, ob der Sender des Antwortsignales und damit auch der Empfänger des Winkbefehls mit dem Endgerät 10 übereinstimmt, das der erfaßten Position zugeordnet ist. Falls keine Übereinstimmung vorliegt, liegt eine fehlerhafte Adressierung vor, da der erste Identifikationsschlüssel nicht mit dem zweiten übereinstimmt. Ansonsten kann die automatische Detektion des Endgerätes 10 verifiziert werden und die Konfiguration kann erfolgen.

Um eine fehlerhafte Adressierung anzuzeigen, ist es möglich am Konfigurationsgerät 12 einen entsprechenden Signalgeber vorzusehen, der zwei Zustände annehmen kann: 'Adressierung ist korrekt' und 'Adressierung fehlerhaft'. Es ist auch möglich ein Display vorzusehen, um dem Bediener bei Bedarf ein Tracing des erfolgten Verfahrensablaufes und gegebenenfalls der Fehlermeldungen anzeigen zu können.

Um die Herstellungskosten zu senken, besteht eine Ausführungsform des erfindungsgemäß ausgebildeten Endgerätes 10 darin, dort einen Schalter vorzusehen, der nach Einbau des Gerätes in der Anlage von Hand betätigt werden kann und der die Position des Endgerätes 10 innerhalb der Anlage kennzeichnet, indem er zwei oder drei Koordinaten des Endgerätes 10 als Binärcodierung speichert. Damit wird erfindungsgemäß für jedes Endgerät 10 ein sogenannter "Unique Adress Identifier" generiert, der als Identifikatiorisschlüssel dlient.

Das eben beschriebene Verfahren dient der Konfigurierung von Endgeräten 10 in einer Prozeßsteuerungsanlage. Es ist jedoch auch möglich, nicht die volle Funktionalität dieses Verfahrens zu nutzen, sondern nur die automatische Identifikation bzw. Adressierung des Endgerätes 10 zu überprüfen, indem nach Übertragung von Winkbefehl und Antwortsignal der erste Identifikationsschlüssel (Adresse) mit dem zweiten (Position) auf Übereinstimmung verglichen wird. Ergebnis dieses Verfahrens ist die binäre Aussage: 'Adressierung fehlerfrei' oder 'Adressierung fehlerhaft'. Eine anschließende Konfigurierung ist nicht zwingend. Ebenso kann nach positivem Abschluß der Überwachung ein Verbindungsaufbau zwischen dem Konfigurationsgerät 12 und dem zu konfigurierenden Endgerät 10 erfolgen für eine umfangreichere Datenübertragung.

Wird als Kommunikationsverbindung 16 eine Funkverbindung gewählt, so sind die Daten auch über das Internet übertragbar, so daß sich das Konfigurationsgerät 12 an einem anderen Standort befinden könnte als die Endgeräte 10.

Es liegt ebenfalls im Rahmen der Erfindung, das Verfahren nicht nur bei einer Konfigurierung des Endgerätes 10 einzusetzen, sondern insbesondere den Winkbefehl und das Antwortsignal dann zu übertragen, wenn ein vorbestimmter Befehl an das Endgerät 10 übertragen wird oder beispielsweise grundsätzlich immer dann, wenn ein beliebiger Befehl an das Endgerät 10 übertragen wird.

In der bevorzugten Ausführungsform ist die Empfangs- und Antworteinheit 22 als Ganzes einheitlich im Endgerät 10 realisiert. Wird ein Winkbefehl vom Konfigurationsgerät 12 gesendet, empfängt die Empfangs- und Antworteinheit 22 des Endgerätes 10 dieses Signal, vergleicht es mit einer Komparatorschaltung mit der eigenen Adresse und sendet, falls eine Übereinstimmung festgestellt worden ist, ein Antwortsignal an das Konfigurationsgerät 12. Wird das Antwortsignal als akustisches und/oder optisches Signal an das Konfigurationsgerät 12 gesendet, ist die Empfangs- und Antworteinheit 22 mit einem akustisches und/oder optischen Signalgeber ausgestattet. Die Überwachungseinheit 24 kann in diesem Fall mit einem entsprechenden akustischen und/oder optischen Signalempfänger versehen sein.

In einer alternativen Ausführungsform ist die Empfangs- und Antworteinheit 22 verteilt, sowohl im Endgerät 10, als auch in dem diesem Endgerät 10 eindeutig zugeordneten Prozeß oder Prozeßteil implementiert. Dann wird der Winkbefehl von dem angesprochenen Endgerät 10 empfangen; aber nicht das Endgerät 10 reagiert selbst auf diesen Winkbefehl, sondern der ihm zugeordnete, das heißt von ihm gesteuerte Prozeß sendet das Antwortsignal an das Konfigurationsgerät 12. Dies ist insbesondere dann vorteilhaft, wenn der Prozeß eine einfachere Identifikation des Endgerätes 10 erlaubt, als das Endgerät 10 selbst. Dies ist beispielsweise dann der Fall, wenn das Antwortsignal in einem optischen Signal besteht, beispielsweise einer leuchtenden LED, das vom Bediener erfaßt wird und wenn die von den Endgeräten 10 gesteuerten Prozesse eine leichter wahrnehmbare und unterscheidbare Position aufweisen, als die jeweiligen Endgeräte 10. Nachdem zu Beginn des Verfahrens die Adresse und die Position des zu konfigurierenden Endgerätes 10 erfaßt worden sind, kann anschließend untersucht werden, ob das Antwortsignal von dem Prozeß bzw. dem Prozeßbauteil gesendet worden ist, das dem Endgerät 10 zugeordnet ist, das an der erfaßten, vorbestimmten Position angeordnet ist.

Die Komparatoreinheit 26 im Konfigurationsgerät 12 überprüft, ob das von ihm empfangene Antwortsignal gleichzeitig dem Endgerät 10 zuzuordnen ist, das die erfaßte Position hat und veranlaßt bei einer Übereinstimmung die Konfigurierung des Endgerät 10. Ansonsten findet eine Fehlermeldung statt.

Vorzugsweise umfaßt die erfindungsgemäße Vorrichtung zusätzlich eine Authentifizierungseinheit 32, mittels derer ein zur Konfigurierung berechtigter Benutzer authentifizierbar ist. Erst nach erfolgreicher Authentifizierung wird eine Konfiguration des Endgerätes 10 möglich.

Das Konfigurationsgerät 12 ist insbesondere in der Ausführungsform der berührungslosen Verbindung mit dem Endgerät 10 tragbar ausgebildet und batteriebetrieben, so daß keinerlei Verkabelung, insbesondere kein Netzkabel, notwendig ist.

### Bezugszeichenliste

- 10: Endgerät
- 11: identifiziertes Endgerät
- 12: Konfigurationsgerät
- 14: Prozeßsteuerungsanlage
- 15: Prozeßanlage
- 16: Kommunikationsverbindung
- 18: Erfassungseinheit
- 20: Sendeeinheit
- 22: Empfangs- und Antworteinheit
- 24: Überwachungseinheit
- 26: Komparatoreinheit
- 28: Konfigurationseinheit
- 30: Speicher
- 32: Authentifizierungseinheit

## Patentansprüche

1. Verfahren zur Konfiguration eines elektrischen Endgerätes (10) oder Teilen davon, das in einer Anlage (14) mit einer Vielzahl von Endgeräten (10) integriert ist, mit einem Konfigurationsgerät (12), das berührungslos mit den Endgeräten (10) verbindbar ist, wobei jedem Endgerät (10) ein erster Identifikationsschlüssel, insbesondere eine Adresse, und ein zweiter Identifikationsschlüssel, zugeordnet ist, mit folgenden Schritten:
A - automatische Identifikation des zu konfigurierenden Endgerätes (10), indem
-- der erste und der zweite Identifikationsschlüssel des zu konfigurierenden Endgerätes (10) erfaßt werden und indem
-- das Konfigurationsgerät (12) ein Signal, insbesondere einen Winkbefehl, an das Endgerät sendet, das dem ersten Identifikationsschlüssel zugeordnet ist, und indem
-- ein durch den Empfang des Winkbefehls identifiziertes Endgerät (11) oder ein diesem identifizierten Endgerät (11) eineindeutig zugeordnetes Gerät auf den Winkbefehl mit einem Antwortsignal antwortet,
B - Überwachen der Identifikation des identifizierten Endgerätes (11), indem
-- überprüft wird, ob das identifizierte Endgerät (11) mit dem Endgerät (10) übereinstimmt, das dem zweiten Identifikationsschlüssel zugeordnet ist und, falls ja,
C - Konfiguration des identifizierten Endgerätes (11) mit dem Konfigurationsgerät durch Übertragung von Konfigurationsdaten.

2. Verfahren nach Anspruch 1,
**dadurch gekennzeichnet, daß**
die Zuordnung zwischen dem ersten Identifikationsschlüssel und dem Endgerät (10) und die Zuordnung zwischen dem zweiten Identifikationsschlüssel und dem Endgerät (10) eineindeutig ist.

3. Verfahren nach einem der Ansprüche 1 oder 2,
**dadurch gekennzeichnet, daß**
der zweite Identifikationsschlüssel die Position des Endgerätes (10) ist, insbesondere die Position des Endgerätes (10) in der Anlage (14).

4. Verfahren nach Anspruch 3,
**dadurch gekennzeichnet, daß**
das Antwortsignal optisch und/oder akustisch und insbesondere endgerätespezifisch ist.

5. Verfahren nach einem der vorstehenden Ansprüche,
**dadurch gekennzeichnet, daß**
die Signale und/oder Daten, die zwischen dem Konfigurationsgerät (12) und dem zu konfigurierenden Endgerät (10) übertragen werden, insbesondere im Konfigurationsgerät (12), gespeichert werden.

6. Verfahren nach einem der vorstehenden Ansprüche,
**dadurch gekennzeichnet, daß**
die Überwachung der Identifikation automatisch in einem Überwachungsmodul des Konfigurationsgerätes (12) erfolgt

7. Verfahren nach einem der vorstehenden Ansprüche,
**dadurch gekennzeichnet, daß**
die Konfiguration eine Erst-Konfiguration, einer Re-Konfiguration, eine Parametrisierung des Endgerätes (10) oder ein Absetzen mindestens eines Befehls an das Endgerät (10) umfaßt.

8. Verfahren nach einem der vorstehenden Ansprüche,
**dadurch gekennzeichnet, daß**
die Konfiguration des identifizierten Endgerätes (11) erst nach Eingabe einer Zugangsberechtigung erfolgt.

9. Verfahren nach einem der vorstehenden Ansprüche,
**dadurch gekennzeichnet, daß**
die Konfiguration des identifizierten Endgerätes (11) automatisch erfolgt.

10. Verfahren nach einem der vorstehenden Ansprüche,
**dadurch gekennzeichnet, daß**
das Verfahren ein Busprotokoll verwendet.

11. Verfahren nach einem der vorstehenden Ansprüche,
**dadurch gekennzeichnet, daß**
das Verfahren zusätzlich nach der Überprüfung der Identifikation des Endgerätes (11) einen Verbindungsaufbau zwischen dem identifizierten Endgerät (11) und dem Konfigurationsgerät (12) umfaßt.

12. Verfahren nach einem der vorstehenden Ansprüche,
**dadurch gekennzeichnet, daß**
die Verbindung zwischen dem Konfigurationsgerät (12) und dem Endgerät (10) bidirektional ist.

13. Verfahren nach einem der vorstehenden Ansprüche,
**dadurch gekennzeichnet, daß**
die Verbindung eine Funkverbindung ist, insbesondere nach dem GSM-Standard.

14. Verfahren nach einem der vorstehenden Ansprüche,
**dadurch gekennzeichnet, daß**
die Verbindung eine Infrarot-Verbindung ist.

15. Verfahren nach einem der vorstehenden Ansprüche 1 bis 11,
**dadurch gekennzeichnet, daß**
die Verbindung zwischen dem Konfigurationsgerät (12) und dem Endgerät (10) unidirektional ist.

16. Verfahren nach einem der vorstehenden Ansprüche 1 bis 14,
**dadurch gekennzeichnet, daß**
die Konfiguration vor der Übertragung der Konfigurationsdaten folgenden Verfahrensschritt umfaßt:
Speichern von bisherigen Konfigurationsdaten bzw. -parametern des Endgerätes (10).

17. Verwendung des Verfahrens nach einem der vorstehenden Ansprüche,
**dadurch gekennzeichnet, daß**
das Verfahren zur Überwachung einer Adressierung eines elektrischen Endgerätes (10) verwendet wird, das in einer Anlage (14) zusammen mit anderen elektrischen Endgeräten (10) angeordnet ist, über ein berührungslos verbindbares Konfigurationsgerät (12), wobei jedem Endgerät (10) ein erster Identifikationsschlüssel, insbesondere eine Adresse und ein zweiter Identifikationsschlüssel zugeordnet ist, mit folgenden Schritten:
- Erfassen der Adresse und des zweiten Identifikationsschlüssels des zu überwachenden Endgerätes (10),
- Senden eines Signals, insbesondere eines Winkbefehls, ausgehend von dem Konfigurationsgerät (12) an die Adresse des Endgerätes (10),
- Empfangen des Winkbefehls von einem durch den Winkbefehl identifizierten Endgerät (11),
- Senden eines Antwortsignals von dem identifizierten Endgerät (11) an das Konfigurationsgerät (12) und
- Überwachen der Adressierung des identifizierten Endgerätes (11), indem das Konfigurationsgerät (12) überprüft, ob das identifizierte Endgerät (11), das das Antwortsignal gesendet hat mit dem Endgerät (10) übereinstimmt, das dem zweiten Identifikationsschlüssel zugeordnet ist und im Falle einer Übereinstimmung eine korrekte Adressierung bestätigt.

18. Vorrichtung zur Konfiguration eines elektrischen Endgerätes (10) oder Teilen davon, das in einer Anlage (14) mit einer Vielzahl von Endgeräten (10) integriert ist, mit einem Konfigurationsgerät (12), das berührungslos mit den Endgeräten (10) verbindbar ist, wobei jedem Endgerät (10) ein erster Identifikationsschlüssel, insbesondere eine Adresse, und ein zweiter Identifikationsschlüssel, zugeordnet ist, mit :
- einer Erfassungseinheit (18), die dem Konfigurationsgerät (12) zugeordnet ist und die den ersten und zweiten Identifikationsschlüssel des zu konfigurierenden Endgerätes (10) erfaßt,
- einer Sendeeinheit (20), die dem Konfigurationsgerät (12) zugeordnet ist und die ein Signal, insbesondere einen Winkbefehl, an das Endgerät (10) sendet, das dem ersten Identifikationsschlüssel zugeordnet ist, und
- einer Empfangs- und Antworteinheit (22), die auf den Winkbefehl des Konfigurationsgerätes (12) mit einem Antwortsignal antwortet,
- einer Überwachungseinheit (24) des Konfigurationsgerätes (12), die überwacht, ob das zu konfigurierende Endgerät (10) korrekt identifiziert worden ist, indem
- eine Komparatoreinheit (26) überprüft, ob ein identifiziertes Endgerät (11), dem das Antwortsignal zugeordnet ist mit dem Endgerät (10) übereinstimmt, das dem zweiten Identifikationsschlüssel zugeordnet ist und
- einer Konfigurationseinheit (28), die dem Konfigurationsgerät (12) zugeordnet ist und die das zu konfigurierende Endgerät (10) durch Übertragung von Konfigurationsdaten konfiguriert.

19. Vorrichtung nach Anspruch 18, **dadurch gekennzeichnet, dass** der zweite Identifikationsschlüssel die Position des Endgerätes (10) innerhalb der Anlage (14) ist.

20. Vorrichtung nach einem der Ansprüche 18 oder 19, **dadurch gekennzeichnet, dass** die Empfangs- und Antworteinheit einen optischen und/oder akustischen Signalgeber aufweist.

21. Vorrichtung nach einem der Ansprüche 18 bis 20, **dadurch gekennzeichnet, dass** die Empfangs- und Antworteinheit (22) dem Endgerät (10) und/oder einem dem Endgerät (10) eineindeutig zugeordnetem Prozeßteil zugeordnet ist.

## Claims

1. Method for configuring an electrical terminal (10) or parts thereof, which is integrated in a system (14) having a large number of terminals (10), having a configuration device (12) which can be connected in contactless fashion to the terminals (10), each terminal (10) being assigned a first identification key, in particular an address, and a second identification key, having the following steps:
A - automatic identification of the terminal (10) to be configured by
-- the first and the second identification keys of the terminal (10) to be Configured being detected, and by
-- the configuration device (12) transmitting a signal, in particular a wink command, to the terminal which is assigned to the first identification key, and by
-- a terminal (11) identified by the reception of the wink command or a device which is uniquely assigned to this identified terminal (11) responding to the wink command with a response signal,
B - monitoring of the identification of the identified terminal (11) by
-- a check being carried out to ascertain whether the identified terminal (11) corresponds to the terminal (10) which is assigned to the second identification key and, if so,
C - configuration of the identified terminal (11) using the configuration device by transmitting configuration data.

2. Method according to Claim 1, **characterized in that** the assignment between the first identification key and the terminal (10) and the assignment between the second identification key and the terminal (10) is unique.

3. Method according to either of Claims 1 and 2, **characterized in that** the second identification key is the position of the terminal (10), in particular the position of the terminal (10) in the system (14).

4. Method according to Claim 3, **characterized in that** the response signal is optical and/or acoustic and, in particular, terminal-specific.

5. Method according to one of the preceding claims, **characterized in that** the signals and/or data which are transmitted between the configuration device (12) and the terminal (10) to be configured are stored, in particular in the configuration device (12).

6. Method according to one of the preceding claims, **characterized in that** monitoring of the identification takes place automatically in a monitoring module of the configuration device (12).

7. Method according to one of the preceding claims, **characterized in that** the configuration comprises initial configuration, reconfiguration, parameterization of the terminal (10) or cancellation of at least one command to the terminal (10).

8. Method according to one of the preceding claims, **characterized in that** the configuration of the identified terminal (11) takes place only once an access authorization has been input.

9. Method according to one of the preceding claims, **characterized in that** the configuration of the identified terminal (11) takes place automatically.

10. Method according to one of the preceding claims, **characterized in that** the method uses a bus protocol.

11. Method according to one of the preceding claims, **characterized in that** the method also comprises establishing a link between the identified terminal (11) and the configuration device (12), after the identification of the terminal (11) has been checked.

12. Method according to one of the preceding claims, **characterized in that** the link between the configuration device (12) and the terminal (10) is bidirectional.

13. Method according to one of the preceding claims, **characterized in that** the link is a radio link, in particular according to the GSM standard.

14. Method according to one of the preceding claims, **characterized in that** the link is an infrared link.

15. Method according to one of the preceding Claims 1 to 11, **characterized in that** the link between the configuration device (12) and the terminal (10) is unidirectional.

16. Method according to one of the preceding Claims 1 to 14, **characterized in that**, prior to the transmission of the configuration data, the configuration comprises the following method step:
storing previous configuration data or parameters for the terminal (10).

17. Use of the method according to one of the preceding claims, **characterized in that** the method is used for monitoring addressing of an electrical terminal (10), which is arranged in a system (14) together with other electrical terminals (10), via a configuration device (12) which can be connected in contactless fashion, each terminal (10) being assigned a first identification key, in particular an address, and a second identification key, having the following steps:
- detection of the address and the second identification key of the terminal (10) to be monitored,
- transmission of a signal, in particular a wink command, starting from the configuration device (12) to the address of the terminal (10),
- reception of the wink command by a terminal (11) identified by the wink command,
- transmission of a response signal from the identified terminal (11) to the configuration device (12), and
- monitoring of the addressing of the identified terminal (11) by the configuration device (12) carrying out a check to ascertain whether the identified terminal (11) which has transmitted the response signal corresponds to the terminal (10) which is assigned to the second identification key and, in the event that they correspond, confirming correct addressing.

18. Apparatus for configuring an electrical terminal (10) or parts thereof, which is integrated in a system (14) having a large number of terminals (10), having a configuration device (12) which can be connected in contactless fashion to the terminals (10), each terminal (10) being assigned a first identification key, in particular an address, and a second identification key, having:
- a detection unit (18) which is assigned to the configuration device (12) and detects the first and second identification keys of the terminal (10) to be configured,
- a transmission unit (20) which is assigned to the configuration device (12) and transmits a signal, in particular a wink command, to the terminal (10) which is assigned to the first identification key, and
- a reception and response unit (22) which responds to the wink command from the configuration device (12) with a response signal,
- a monitoring unit (24) of the configuration device (12) which monitors whether the terminal (10) to be configured has been correctly identified by
- a comparator unit (26) carrying out a check to ascertain whether an identified terminal (11) which is assigned to the response signal corresponds to the terminal (10) which is assigned to the second identification key, and
- a configuration unit (28) which is assigned to the configuration device (12) and configures the terminal (10) to be configured by transmitting configuration data.

19. Apparatus according to Claim 18, **characterized in that** the second identification key is the position of the terminal (10) within the system (14).

20. Apparatus according to either of Claims 18 and 19, **characterized in that** the reception and response unit has an optical and/or acoustic signal transmitter.

21. Apparatus according to one of Claims 18 to 20, **characterized in that** the reception and response unit (22) is assigned to the terminal (10) and/or a process element clearly which is assigned to the terminal (10).

## Revendications

1. Procédé pour configurer un terminal électrique (10) ou des parties de celui-ci, lequel est intégré dans un équipement (14) comprenant une pluralité de terminaux (10), avec un appareil de configuration (12) qui peut être connecté sans contact avec les terminaux (10), une première clé d'identification, notamment une adresse, et une deuxième clé d'identification étant associées à chaque terminal (10), comprenant les étapes suivantes :
A - Identification automatique du terminal (10) à configurer en détectant la première et la deuxième clés d'identification du terminal (10) à configurer et en ce que l'appareil de configuration (12) envoie un signal, notamment une instruction d'appel, au terminal qui est associé à la première clé d'identification et en ce qu'un terminal identifié (11) par la réception de l'instruction d'appel ou un appareil associé explicitement à ce terminal identifié (11) répond à l'instruction d'appel par un signal de réponse,
B - Surveillance de l'identification du terminal identifié (11) en contrôlant si le terminal identifié (11) concorde avec le terminal (10) auquel est associée la deuxième clé d'identification et, dans l'affirmative,
C - Configuration du terminal identifié (11) avec l'appareil de configuration par transmission de données de configuration.

2. Procédé selon la revendication 1, **caractérisé en ce que** l'association entre la première clé d'identification et le terminal (10) et l'association entre la deuxième clé d'identification et le terminal (10) est explicite.

3. Procédé selon l'une des revendications 1 ou 2, **caractérisé en ce que** la deuxième clé d'identification est la position du terminal (10), notamment la position du terminal (10) au sein de l'équipement (14).

4. Procédé selon la revendication 3, **caractérisé en ce que** le signal de réponse est visuel et/ou sonore et notamment spécifique au terminal.

5. Procédé selon l'une des revendications précédentes, **caractérisé en ce que** les signaux et/ou les données qui sont transmis entre l'appareil de configuration (12) et le terminal (10) à configurer sont notamment enregistrés dans l'appareil de configuration (12).

6. Procédé selon l'une des revendications précédentes, **caractérisé en ce que** la surveillance de l'identification s'effectue automatiquement dans un module de surveillance de l'appareil de configuration (12).

7. Procédé selon l'une des revendications précédentes, **caractérisé en ce que** la configuration comprend une première configuration, une reconfiguration, un paramétrage du terminal (10) ou une dépose d'au moins une instruction sur le terminal (10).

8. Procédé selon l'une des revendications précédentes, **caractérisé en ce que** la configuration du terminal identifié (11) n'a lieu qu'après la saisie d'une autorisation d'accès.

9. Procédé selon l'une des revendications précédentes, **caractérisé en ce que** la configuration du terminal identifié (11) s'effectue automatiquement.

10. Procédé selon l'une des revendications précédentes, **caractérisé en ce que** le procédé emploie un protocole de bus.

11. Procédé selon l'une des revendications précédentes, **caractérisé en ce que** le procédé comprend en plus, après le contrôle de l'identification du terminal (11), l'établissement d'une liaison entre le terminal identifié (11) et l'appareil de configuration (12).

12. Procédé selon l'une des revendications précédentes, **caractérisé en ce que** la liaison entre l'appareil de configuration (12) et le terminal (10) est bidirectionnelle.

13. Procédé selon l'une des revendications précédentes, **caractérisé en ce que** la liaison est une liaison radioélectrique, notamment selon la norme GSM.

14. Procédé selon l'une des revendications précédentes, **caractérisé en ce que** la liaison est une liaison infrarouge.

15. Procédé selon l'une des revendications 1 à 11, **caractérisé en ce que** la liaison entre l'appareil de configuration (12) et le terminal (10) est unidirectionnelle.

16. Procédé selon l'une des revendications 1 à 14, **caractérisé en ce que** la configuration, avant la transmission des données de configuration, comprend l'étape suivante :
Enregistrement des données ou des paramètres de configuration précédents du terminal (10).

17. Utilisation du procédé selon l'une des revendications précédentes, **caractérisée en ce que** le procédé est utilisé pour surveiller un adressage d'un terminal électrique (10), qui est disposé dans un équipement (14) en commun avec d'autres terminaux électriques (10), par le biais d'un appareil de configuration (12) pouvant être connecté sans contact, une première clé d'identification, notamment une adresse, et une deuxième clé d'identification étant associées à chaque terminal (10), comprenant les étapes suivantes :
- Détection de l'adresse et de la deuxième clé d'identification du terminal (10) à surveiller,
- Envoi d'un signal, notamment une instruction d'appel, de l'appareil de configuration (12) à l'adresse du terminal (10),
- Réception de l'instruction d'appel par un terminal identifié (11) par l'instruction d'appel,
- Envoi d'un signal de réponse par le terminal identifié (11) à l'appareil de configuration (12) et
- Surveillance de l'adressage du terminal identifié (11) **en ce que** l'appareil de configuration (12) contrôle si le terminal identifié (11), lequel a envoyé le signal de réponse, concorde avec le terminal (10) auquel est associée la deuxième clé d'identification et, dans l'affirmative, confirmation d'un adressage correct.

18. Dispositif pour configurer un terminal électrique (10) ou des parties de celui-ci, lequel est intégré dans un équipement (14) comprenant une pluralité de terminaux (10), avec un appareil de configuration (12) qui peut être connecté sans contact avec les terminaux (10), une première clé d'identification, notamment une adresse, et une deuxième clé d'identification étant associées à chaque terminal (10), comprenant :
- une unité de détection (18) qui est associée à l'appareil de configuration (12) et qui détecte la première et la deuxième clés d'identification du terminal (10) à configurer,
- une unité d'émission (20) qui est associée à l'appareil de configuration (12) et qui envoie un signal, notamment une instruction d'appel, au terminal (10) qui est associé à la première clé d'identification, et
- une unité de réception et de réponse (22) qui répond par un signal de réponse à l'instruction d'appel de l'appareil de configuration (12),
- une unité de surveillance (24) de l'appareil de configuration (12) qui surveille si le terminal (10) à configurer a bien été identifié en ce
- qu'une unité de comparaison (26) vérifie si un terminal identifié (11) auquel est associé le signal de réponse concorde avec le terminal (10) auquel est associée la deuxième clé d'identification et,
- une unité de configuration (28) qui est associée à l'appareil de configuration (12) et qui configure le terminal (10) à configurer par transmission de données de configuration.

19. Dispositif selon la revendication 18, **caractérisé en ce que** la deuxième clé d'identification est la position du terminal (10) au sein de l'équipement (14).

20. Dispositif selon l'une des revendications 18 ou 19, **caractérisé en ce que** l'unité de réception et de réponse présente un générateur de signal sonore et/ou visuel.

21. Dispositif selon l'une des revendications 18 à 20, **caractérisé en ce que** l'unité de réception et de réponse (22) est associée au terminal (10) et/ou à une partie du processus explicitement associée au terminal (10).
